# EUROPÄISCHE PATENTSCHRIFT

(11) **EP 4 558 738 B1**
(45) Veröffentlichungstag und Bekanntmachung des Hinweises auf die Patenterteilung: **22.07.2026**
(21) Anmeldenummer: 22826332.3
(22) Anmeldetag: 02.12.2022
(51) Int. Cl.: F16C 33/64, B22F 10/66, F16C 41/00

(54) **WÄLZLAGERELEMENT UND VERFAHREN ZUR HERSTELLUNG EINES WÄLZLAGERELEMENTES**
ROLLING BEARING AND METHOD TO MANUFACTURE A ROLLING BEARING
ROULEMENT ET PROCÉDÉ DE FABRICATION D'UN ROULEMENT

(30) Priorität: 22.07.2022 DE 102022118368
(43) Veröffentlichungstag der Anmeldung: 28.05.2025
(73) Patentinhaber: Schaeffler Technologies AG & Co. KG, 91074 Herzogenaurach (DE)
(72) Erfinder: BRAUN, Wolfgang, 97493 Garstadt (DE); PAPKE, Thomas, 90607 Rückersdorf (DE); REITH, Michael, 97440 Werneck (DE)
(74) Vertreter: Schaeffler Technologies
(86) Internationale Anmeldenummer: PCT/DE2022/100905
(87) Internationale Veröffentlichungsnummer: WO 2024/017425

(56) Entgegenhaltungen:
- WO-A1-2015/091726
- DE-A1- 102017 106 234
- DE-A1- 102019 132 320
- GB-A- 2 551 434
- US-A1- 2017 298 990

## Beschreibung

Die Erfindung betrifft ein additiv gefertigtes Wälzlagerelement. Ferner betrifft die Erfindung ein Verfahren zur Herstellung eines solchen Wälzlagerelementes.

Aus der WO 2012/022616 A1 ist ein Lagerbestandteil bekannt, welcher mittels eines 3D-Druckverfahrens hergestellt wird. Im Detail ist in der WO 2012/022616 A1 die Herstellung eines Wälzlagerkäfigs beschrieben. Darüber hinaus ist die Möglichkeit erwähnt, auch Lagerringe additiv herzustellen. In jedem Fall ist vorgesehen, auf einen Grundkorpus des Lagerbestandteils eine dünne, nanokristalline Beschichtung aufzubringen. Die nanokristalline Beschichtung verbessert die mechanische Festigkeit und chemische Beständigkeit des Lagerbestandteils.

In der DE 10 2017 115 803 A1 ist im Zusammenhang mit der Herstellung von Lagerkomponenten die Möglichkeit des Auftragsschweißens thematisiert. Es wird vorgeschlagen, auf einen Bauteilabschnitt aus einer Hochtemperaturlegierung durch Auftragsschweißen eine einen zweiten Bauteilabschnitt darstellende Schicht aus einem warmfesten Material aufzubringen, wobei an der zweiten Schicht eine Wälzkörperlaufbahn ausgebildet wird. Insgesamt hat die DE 10 2017 115 803 A1 Komponenten eines Flugzeugtriebwerks zum Gegenstand.

Sprühverfahren, die bei der Herstellung von Lagerbauteilen zum Einsatz kommen können, sind in den Dokumenten DE 10 2012 203 110 A1 und DE 10 2006 023 690 A1 offenbart. In beiden Fällen ist das Aufsprühen von geschmolzenem Metall auf ein rohrförmiges Werkstück vorgesehen.

Weitere Möglichkeiten des Materialauftrags sind zum Beispiel in der WO 2019/185626 A1 beschrieben. In diesem Fall wird ein Materialmuster, welches sich auf einer Unterlage befindet, auf ein Substrat übertragen.

Die WO 2015/091726 A1 beschreibt einen Baustein umfassend ein erstes gedrucktes Material, das durch ein additives Fertigungsverfahren gedruckt wird. Dabei werden Wälzlager beschrieben, die Bausteine in Form von Lagerringen umfassen, welche vorgefertigte ringförmige Bauelemente umfassend eine Lauffläche für Wälzkörper mit daran additiv hergestellten Bauelementen vereinen. Weiterhin werden Bausteine beschrieben, die unterschiedliche gedruckte metallische Materialien umfassen

Die DE 10 2019 132 320 A1 offenbart einen additiv hergestellten Lagerkäfig für ein Wälzlager, der einen Grundkörper und einen in den Grundkörper integrierten Sensor zur Erfassung verschiedene Parameter, wie beispielsweise Schwingungen, Temperaturen und Spannungszustände des Grundkörpers, aufweist.

Die DE 10 2017 106 234 A1 beschreibt eine Lageranordnung umfassend ein Wälzlager, welches einen Innenring und einen Außenring aufweist. Der Innenring oder der Außenring ist als Bestandteil eines zu lagernden Funktionselements ausgebildet. Ein solches Funktionselement kann mittels eines additiven Herstellverfahrens ausgebildet werden, wobei verschiedene Materialien zum Einsatz kommen können.

Der Erfindung liegt die Aufgabe zugrunde, Möglichkeiten der Nutzung additiver Verfahren bei der Herstellung von Wälzlagerkomponenten gegenüber dem genannten Stand der Technik zu erweitern, wobei ein besonders günstiges Verhältnis zwischen Herstellungsaufwand und erzielbaren Produkteigenschaften angestrebt wird.

Diese Aufgabe wird erfindungsgemäß gelöst durch ein Wälzlagerelement mit den Merkmalen des Anspruchs 1. Ebenso wird die Aufgabe gelöst durch ein Verfahren zur Herstellung eines Wälzlagerelementes gemäß Anspruch 6. Im Folgenden im Zusammenhang mit dem Herstellungsverfahren erläuterte Ausgestaltungen und Vorteile der Erfindung gelten sinngemäß auch für die Vorrichtung, das heißt das Wälzlagerelement, und umgekehrt.

Das Wälzlagerelement weist eine Vielzahl an 3D-Druck-Schichten, wobei zumindest eine Teilmenge dieser Schichten aus mehreren, in der betreffenden Schicht nebeneinander angeordneten Schichtabschnitten aus verschiedenen Materialien aufgebaut ist. Innerhalb eines Schichtstapels, aus welchem das Wälzlagerelement gebildet ist, sind gleichartige Schichtabschnitte in mehreren der Schichten unmittelbar übereinander angeordnet, so dass eine Materialschichtung quer zum Aufbau der 3D-Druck-Schichten gegeben ist.

Insgesamt sind damit Schichtungen in zueinander zumindest ansatzweise orthogonalen Richtungen, das heißt in sich kreuzenden Richtungen, gegeben. Zum einen handelt es sich dabei um die Schichten, die im Zuge der additiven Fertigung aufeinander aufgebaut werden. Zum anderen entsteht eine Schichtung in Querrichtung dadurch, dass jede einzelne 3D-Druckschicht aus mehreren nebeneinander liegenden Abschnitten gebildet ist, wobei gleichartige Abschnitte mehrerer Schichten insgesamt einen wiederum schichtartigen Bereich ergeben, der sich im Wesentlichen orthogonal zu den aufeinander liegenden 3D-Druckschichten erstreckt.

Der Gesamtaufbau des Wälzlagerelementes kann damit im Querschnitt als matrixartig betrachtet werden, wobei nicht notwendigerweise ein streng rechtwinkliges Zeilen-Spalten-Muster gegeben sein muss. Vielmehr sind die 3D-Druckschichten als Zeilen aufzufassen, wogegen die durch jeweils gleichartige Schichtabschnitte gebildeten sogenannten Spalten nicht notwendigerweise jeweils eine einheitliche Breite oder einen zu den Zeilen rechtwinkligen Verlauf aufweisen. Dennoch ist in allen Fällen eine sich kreuzende Struktur der 3D-Druckschichten einerseits und der verschiedenen Materialschichten andererseits gegeben. Es hat sich gezeigt, dass damit sowohl eine Fertigung des Wälzlagerelementes mit akzeptablem Aufwand möglich ist als auch die Materialeigenschaften in den verschiedenen Volumen- und Oberflächenbereichen in hervorragender Weise auf die jeweiligen Anforderungen abstimmbar sind.

Das Wälzlagerelement ist allgemein herstellbar, indem eine Vielzahl an Schichten additiv erzeugt wird, in denen jeweils verschiedene, sich zumindest hinsichtlich ihrer elektrischen Leitfähigkeit voneinander unterscheidende Materialien in geometrisch definierten Schichtabschnitten nebeneinander angeordnet sind, wobei gleichartige Schichtabschnitte in mehreren der genannten Schichten derart direkt übereinander generiert werden, dass eine Materialschichtung quer zum Aufbau der additiv gefertigten Schichten entsteht.

Mindestens einer der Schichtabschnitte ist aus einem metallischen Werkstoff und ein weiterer Schichtabschnitt aus einem elektrisch isolierenden Werkstoff aufgebaut. Der elektrisch isolierende Werkstoff enthält mindestens eines der Materialien Glas und Keramik in Form einer Fritte. Unter einer Fritte wird ein zunächst pulverförmiges Material aus Glas und/oder Keramik verstanden, welches im Zuge der additiven Fertigung unter Temperatureinwirkung ein festes Bauteil, im vorliegenden Fall ein Wälzlagerelement, bildet.

Die Dicke der elektrisch isolierenden Schicht des Wälzlagerelementes, welche auch in sonstiger Weise aus Glas, Keramik oder Glaskeramik herstellbar ist, beträgt in typischen Ausgestaltungen 0,1 mm bis 1 mm.

Als metallischer, in 3D-Druckverfahren verarbeitbarer Werkstoff des Wälzlagerelementes für den Funktionsbereich, das heißt die Laufbahn, ist insbesondere ein Schnellarbeitsstahl der Sorte 1.3344 (X 130 WMoCrV 6-5-4-3) geeignet.

Werkstücke aus Stahl mit der Werkstoffnummer 1.3344 sind unter anderem pulvermettalurgisch herstellbar und zeichnen sich unter anderem durch ein homogenes Werkstoffgefüge aus, welches eine zähe Werkstoffmatrix sowie sehr hohe Gehalte an feinen, gleichmäßig verteilten Karbiden aufweist. Stabile Eigenschaften sind bis zu außerordentlich hohen Anwendungstemperaturen von 400 °C gegeben.

Mit Stahl der Sorte 1.3344 PM sind im vorliegenden Fall Oberflächenhärten von 60 HRC und mehr ohne anschließende Wärmebehandlung erzielbar. In typischer Verfahrensführung wird das Wälzlagerelement nach der additiven Fertigung lediglich durch Schleifen und/oder Honen, das heißt spanabhebende Bearbeitung mit geometrisch nicht definierter Schneide, fertigbearbeitet.

In zentralen Volumenbereichen des Wälzlagerelementes zwischen einer elektrisch isolierenden, eine erste Werkstückoberfläche bildenden Schicht einerseits und einer metallischen, aus einem hochbelastbaren Material gefertigten Schicht andererseits kann sich eine weitere metallische Schicht befinden, welche aus einem vergleichsweise gering belastbaren metallischen Material gebildet ist.

Bei dem Wälzlagerelement kann es sich beispielsweise um einen Wälzkörper oder einen Lagerring handeln. Auch Sonderformen von Wälzelementen, beispielsweise Planeten von Planetenwälzgewindetrieben, sind durch das anmeldungsgemäße Verfahren herstellbar.

Im Fall der Ausbildung des Wälzlagerelementes als Innenring eines Wälzlagers kann der Durchmesser der Bohrung des Lagerrings beispielsweise im Bereich von 5 mm bis 70 mm oder auch darüber liegen. In allen Fällen liegt ein Vorteil des Herstellungsverfahrens insbesondere darin, dass eine elektrische Isolationsschicht, unter anderem an der Bohrung des ringförmigen Werkstücks, in einem einzigen Fertigungsschritt, das heißt im Zuge der additiven Fertigung des Wälzlagerelementes, erzeugt werden kann.

Bei der Innenringbohrung handelt es sich, verglichen mit anderen Flächen der Wälzlagerung, um eine relativ kleine Fläche. Die an dieser Stelle befindliche elektrische Isolation minimiert somit im Vergleich zu räumlich ausgedehnteren Isolationslagen, etwa an der Außenumfangsfläche eines Außenrings, Kapazitäten, so dass eine Übertragung von Wechselströmen minimiert wird. Sofern der Lagerring mindestens einen Bord aufweist, kann sich eine Isolationsschicht beispielsweise an keinem Bord, an einem der Borde oder an beiden Borden befinden.

In allen Fällen, in denen durch einen metallischen Bestandteil des Wälzlagerelementes eine Wälzkörperlaufbahn gebildet ist, ist in einem die Wälzkörperlaufbahn bereitstellenden Bereich an Schichten jede Schicht dieses Bereichs aus drei verschiedenen, nebeneinander angeordneten Schichtabschnitten, nämlich einem metallischen Laufbahnabschnitt, einem zentralen, ebenfalls metallischen Schichtabschnitt und einem Isolationsabschnitt, aufgebaut, wogegen in einem von der Wälzkörperlaufbahn beabstandeten Bereich an Schichten jede Schicht lediglich aus zwei verschiedenen Schichtabschnitten, nämlich einem Isolationsabschnitt und einem Abschnitt, dessen Zusammensetzung den zentralen Schichtabschnitten entspricht, gebildet ist.

Die Stärke der Materialschicht, welche die Wälzkörperlaufbahn bereitstellt, ist nicht notwendigerweise einheitlich. Beispielsweise nimmt die in Normalrichtung einer die Wälzkörperlaufbahn tangierenden Ebene zu messende Stärke der die Wälzkörperlaufbahn bereitstellenden Schichtabschnitte von der Mitte der Wälzkörperlaufbahn nach außen hin ab. Zugleich kann durch die elektrisch isolierenden Schichtabschnitte sowohl eine zylindrische Oberfläche als auch eine stirnseitige Oberfläche des Wälzlagerelementes gebildet sein.

Allgemein wird die Materialschicht, welche als Wälzkörperlaufbahn dient, auch als Funktionsschicht bezeichnet. In verschiedenen möglichen Ausgestaltungen liegt die Materialstärke der Funktionsschicht in Abhängigkeit von der Lagergröße im Bereich von 0,3 mm bis 5 mm, was zum Beispiel 2 % bis 10 %, insbesondere etwa 5 %, des dem Lager zugeordneten Wälzkörperdurchmessers entspricht.

Die additive Fertigung des Wälzlagerelementes hat auch den Vorteil, dass im Herstellungsprozess Kühl- und/oder Schmierkanäle, welche das Wälzlagerelement durchziehen, hergestellt werden können. Auf die gleiche Weise können Hohlräume erzeugt werden, um die Masse des Wälzlagerelementes und damit auch im Betrieb des Wälzlagers relevante Trägheitsmomente zu minimieren. Darüber hinaus ist es unter anderem möglich, einen Dichtungssitz geeigneter Materialbeschaffenheit vorzubereiten, sodass spanabhebende Fertigungsschritte entfallen können.

Die thermischen Ausdehnungskoeffizienten der verschiedenen, teils metallischen, teils nichtmetallischen Werkstoffe, aus welchen das Wälzlagerelement additiv aufgebaut wird, sind aufeinander abzustimmen, wobei übereinstimmende Ausdehnungskoeffizienten ideal sind. Die Erhitzung der verschiedenen Materialien, welche typischerweise in Pulverform vorliegen, geschieht in der Regel mittels eines Lasers. Durch die Laserbearbeitung werden nicht nur die einzelnen Materialschichten in sich verfestigt, sondern auch feste Verbindungen zwischen den verschiedenen Materialabschnitten hergestellt. Um die Verbindungen zwischen den verschiedenen Materialien noch belastbarer zu machen, können Verzahnungsgeometrien zwischen den einzelnen Schichtabschnitten vorgesehen sein.

Das Wälzlagerelement ist besonders für den Einsatz unter Bedingungen, die im Allgemeinen den Verschleiß fördern, geeignet. Schlagwortartig sind in diesem Zusammenhang dünne Öle, lange Fettgebrauchsdauern und hohe Drehzahlen zu nennen. Zudem eignet sich das Wälzlagerelement insbesondere für den Einsatz in elektrischen Maschinen, indem ein Stromdurchgang mittels der isolierenden nicht metallischen Lage verhindert wird. Bei dem das Wälzlagerelement umfassenden Wälzlager kann es sich um ein Lager beliebiger prinzipiell bekannter Bauart, beispielsweise ein Kugellager, Zylinderrollenlager, Tonnenrollenlager oder Kegelrollenlager, handeln.

Nachfolgend wird ein Ausführungsbeispiel der Erfindung anhand einer Zeichnung näher erläutert. Hierin zeigen:
- Fig. 1: ein Wälzlager, nämlich einreihiges Schrägkugellager, in einer Schnittdarstellung,
- Fig. 2: einen additiv gefertigten Innenring des Wälzlagers nach Figur 1,
- Fig. 3: in schematisierter Darstellung einen Schichtaufbaus des Innenrings.

Ein insgesamt mit 1 bezeichnetes Wälzlager ist im Ausführungsbeispiel als Schrägkugellager ausgebildet. Das Kugellager 1 umfasst einen Innenring 2, eine Anzahl an Wälzkörpern 3, das heißt Kugeln, welche optional in einem nicht dargestellten Käfig geführt sind, sowie einen Außenring 4. Die Lagerringe 2, 4 sowie Wälzkörper 3 werden zusammenfassend als Wälzlagerelemente 2, 3, 4 bezeichnet. Die Wälzkörper 3 rollen auf einer Laufbahn 5 des Innenrings 2 und einer Laufbahn 6 des Außenrings 4 ab. Im Folgenden wird der Innenring 2 näher betrachtet, wobei der Außenring 4 auf dieselbe oder eine beliebige andere Weise gefertigt sein kann. Die Bohrung des Innenrings 2 ist mit 13 bezeichnet und weist eine zylindrische Wandung 14 auf, wobei auch eine leicht konische Form der Wandung 14 gegeben sein kann. Insgesamt ist das Wälzlager 1 in an sich bekannter Weise zur Aufnahme von Radial- und Axialkräften in einer Richtung geeignet.

Der Innenring 2 weist auf seiner Außenseite, das heißt seiner die Laufbahn 5 bereitstellenden Seite, eine teils gekrümmte Kontur auf, die entsprechend dem gewünschten Druckwinkel des Kugellagers 1 ausgelegt ist.

Der gesamte Innenring 2 ist additiv gefertigt, was sich in einem Aufbau aus einzelnen Schichten 7, 11 ausdrückt. Jede Schicht 7, 11 wird aus verschiedenen pulverförmigen Ausgangsmaterialien, die im Zuge der additiven Fertigung per Laser erhitzt werden, hergestellt. In demjenigen Abschnitt des Innenrings 2, in welchem die Laufbahn 5 ausgebildet ist, setzt sich jede Schicht 7 aus drei voneinander unterscheidbaren Abschnitten 8, 9, 10 zusammen. Im Einzelnen handelt es sich hierbei um einen Isolationsabschnitt 8, welcher die zylindrische Wandung 14 bildet, um einen zentralen Schichtabschnitt 9 aus einem metallischen Werkstoff und einem ebenfalls metallischem Abschnitt 10, welcher die Laufbahn 5 bildet.

Der Laufbahnabschnitt 10 ist hierbei aus einem Schnellarbeitsstahl der Sorte 1.3344 gefertigt und weist eine Oberflächenhärte von mindestens 60 HRC auf. Im Vergleich hierzu ist die Härte des zentralen Schichtabschnitts 9 geringer. Der zentrale Schichtabschnitt 9 sorgt für eine geringfügige, jedoch technisch relevante Duktilität des Innenrings 2. Insgesamt stellen die Schichtabschnitte 8, 9, 10 Materialschichten dar, welche im Wesentlichen quer zu den in den Figuren waagerecht angeordneten Schichten 7, 11 ausgerichtet sind.

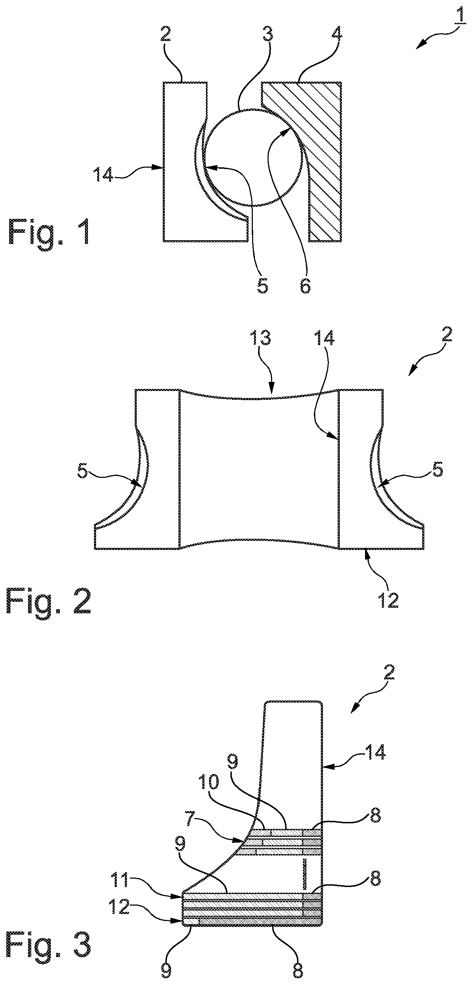

Wie in den Fig. 1 und 2 angedeutet ist, ist die Stärke der Laufbahnschicht 10, zu messen in Radialrichtung des Wälzlagers 1, innerhalb der Laufbahnschicht 10 uneinheitlich. Die größte Stärke der Laufbahnschicht 10 ist an derjenigen Stelle gegeben, an welcher die mechanische Belastung durch den Wälzkörper 3 maximal ist, das heißt in demjenigen Bereich, durch welchen die Drucklinie verläuft. Eine schräg gestellte Drucklinie, wie im vorliegenden Fall gegeben, ist gleichbedeutend damit, dass das Wälzlager 1 in der Lage ist, sowohl Radialkräfte als auch Axialkräfte aufzunehmen. In Richtung zu den Rändern der Laufbahn 5, das heißt in Richtung einer geringeren mechanischen Belastung der Laufbahn 5, nimmt die Stärke des Laufbahnabschnitts 10 ab. Außerhalb der Laufbahn 5 entfällt der Laufbahnabschnitt 10 komplett, wie aus Fig. 3 hervorgeht. In diesem Bereich sind mit 11 bezeichnete Schichten gegeben, welche lediglich aus den Schichtabschnitten 8, 9 gebildet sind. Ungeachtet der Tatsache, dass der Schichtabschnitt 9 in diesem Fall bis zur Oberfläche des Innenrings 2 reicht, wird einheitlich von einem zentralen Schichtabschnitt 9 gesprochen. Eine Besonderheit ist bei einer mit 12 bezeichneten stirnseitigen Schicht gegeben: In diesem Fall erstreckt sich der Isolationsabschnitt 8 über nahezu die gesamte Schicht 12, so dass die gewünschte elektrische Isolationswirkung nicht nur an der zylindrischen Wandung 14, sondern auch an nahezu der gesamten Stirnseite des Innenrings 2 gegeben ist. Abweichend von dem in Fig. 3 schematisch dargestellten Aufbau ist auch eine komplette Ausbildung der stirnseitigen Schicht 12 als Isolationsschicht 8 möglich.

### Bezugszeichenliste

- 1: Wälzlager, Kugellager
- 2: Innenring
- 3: Wälzkörper, Kugel
- 4: Außenring
- 5: Laufbahn des Innenrings
- 6: Laufbahn des Außenrings
- 7: Schicht erster Art, aus drei Schichtabschnitten aufgebaut
- 8: Isolationsabschnitt der Schicht
- 9: zentraler Schichtabschnitt
- 10: Laufbahnabschnitt der Schicht
- 11: Schicht zweiter Art, aus zwei Schichtabschnitten aufgebaut
- 12: stirnseitige Schicht
- 13: Bohrung des Innenrings
- 14: Wandung der Bohrung

## Patentansprüche

1. Wälzlagerelement (1), aufweisend eine Vielzahl an 3D-Druck-Schichten (7, 11, 12), wobei zumindest eine Teilmenge dieser Schichten (7, 11, 12) aus mehreren, in der betreffenden Schicht (7, 11, 12) nebeneinander angeordneten Schichtabschnitten (8, 9, 10) aus verschiedenen Materialien aufgebaut ist, und wobei gleichartige Schichtabschnitte (8, 9, 10) in mehreren dieser Schichten (7, 11, 12) unmittelbar übereinander angeordnet sind, so dass eine Materialschichtung quer zum Aufbau der 3D-Druck-Schichten (7, 11, 12) gegeben ist, wobei mindestens einer der Schichtabschnitte (9, 10) aus einem metallischen Werkstoff und ein weiterer Schichtabschnitt (8) aus einem elektrisch isolierenden Werkstoff aufgebaut ist und der elektrisch isolierende Werkstoff mindestens eines der Materialien Glas und Keramik in Form einer Fritte enthält,
**dadurch gekennzeichnet, dass**
in einem, eine Wälzkörperlaufbahn (5, 6) des Wälzlagerelements (1) bereitstellenden Bereich an Schichten (7) jede Schicht (7) aus drei verschiedenen, nebeneinander angeordneten Schichtabschnitten (8, 9, 10), nämlich einem metallischen Laufbahnabschnitt (10), einem zentralen, ebenfalls metallischen Schichtabschnitt (9) und einem Isolationsabschnitt (8), aufgebaut ist, wogegen in einem von der Wälzkörperlaufbahn (5, 6) beabstandeten Bereich an Schichten (11) jede Schicht (11) lediglich aus zwei verschiedenen Schichtabschnitten (8, 9), nämlich einem Isolationsabschnitt (8) und einem Abschnitt (9), dessen Zusammensetzung den zentralen Schichtabschnitten (9) entspricht, aufgebaut ist.

2. Wälzlagerelement (1) nach Anspruch 1, **dadurch gekennzeichnet, dass** als metallischer Werkstoff mindestens eines Schichtabschnitts (9, 10) Stahl mit der Werkstoffnummer 1.3344 (X130WMoCrV6-5-4-3) vorgesehen ist.

3. Wälzlagerelement (1) nach einem der Ansprüche 1 oder 2, **dadurch gekennzeichnet, dass** durch eine Mehrzahl an übereinander geschichteten metallischen Schichtabschnitten (10) eine Wälzkörperlaufbahn (5, 6) gebildet ist.

4. Wälzlagerelement (1) nach einem der Ansprüche 1 bis 3, **dadurch gekennzeichnet, dass** dieses als Lagerring ausgebildet ist.

5. Wälzlagerelement (1) nach Anspruch 4, **dadurch gekennzeichnet, dass** die in Normalrichtung einer die Wälzkörperlaufbahn (5, 6) tangierenden Ebene zu messende Stärke der die Wälzkörperlaufbahn (5, 6) bereitstellenden Schichtabschnitte (10) von der Mitte der Wälzkörperlaufbahn (5, 6) nach außen hin abnimmt und durch die elektrisch isolierenden Schichtabschnitte (8) sowohl eine zylindrische Oberfläche (14) als auch eine stirnseitige Oberfläche gebildet ist.

6. Verfahren zur Herstellung eines Wälzlagerelementes (1) nach einem der Ansprüche 1 bis 5, wobei additiv eine Vielzahl an Schichten (7, 11, 12) erzeugt wird, in denen jeweils verschiedene, sich zumindest hinsichtlich ihrer elektrischen Leitfähigkeit voneinander unterscheidende Materialien in geometrisch definierten Schichtabschnitten (8, 9, 10) nebeneinander angeordnet sind, wobei gleichartige Schichtabschnitte (8, 9, 10) in mehreren der genannten Schichten (7, 11, 12) derart direkt übereinander generiert werden, dass eine Materialschichtung quer zum Aufbau der additiv gefertigten Schichten (7, 11, 12) entsteht.

7. Verfahren nach Anspruch 6, **dadurch gekennzeichnet, dass** eine Oberfläche des Wälzlagerelements (1) nach der additiven Fertigung durch spanabhebende Bearbeitung mit geometrisch nicht definierter Schneide endbearbeitet wird.

## Claims

1. A rolling bearing (1) having a plurality of 3D printed layers (7, 11, 12), wherein at least a subset of these layers (7, 11, 12) is composed of a plurality of layer sections (8, 9, 10) of different materials arranged side by side in the respective layer (7, 11, 12), and wherein similar layer sections (8, 9, 10) are arranged directly above one another in a plurality of these layers (7, 11, 12), such that a material layering transverse to the structure of the 3D printed layers (7, 11, 12) is given, wherein at least one of the layer sections (9, 10) is composed of a metallic material and a further layer section (8) is composed of an electrically insulating material, and the electrically insulating material contains at least one of the materials glass and ceramic in the form of a frit,
**characterised in that,**
in a region of layers (7) providing a rolling element raceway (5, 6) of the rolling bearing (1), each layer (7) is composed of three different, adjacent layer sections (8, 9, 10), namely a metallic raceway section (10), a central, also metallic layer section (9) and an insulating section (8), whereas, in a region of layers (11) spaced apart from the rolling element raceway (5, 6), each layer (11) is composed of only two different layer sections (8, 9), namely an insulating section (8) and a section (9) whose composition corresponds to the central layer sections (9).

2. The rolling bearing (1) according to claim 1, **characterised in that** steel with material number 1.3344 (X130WMoCrV6-5-4-3) is provided as the metallic material of at least one layer section (9, 10).

3. The rolling bearing (1) according any to one of claims 1 or 2, **characterised in that** a rolling element raceway (5, 6) is formed by a plurality of superimposed metallic layer sections (10).

4. The rolling bearing (1) according to any one of claims 1 to 3, **characterised in that** this is formed as a bearing ring.

5. The rolling bearing (1) according to claim 4, **characterised in that** the thickness of the layer sections (10) providing the rolling element raceway (5, 6), measured in the normal direction of a plane tangent to the rolling element raceway (5, 6), decreases from the centre of the rolling element raceway (5, 6) outwards, and both a cylindrical surface (14) and an end-face surface are formed by the electrically insulating layer sections (8).

6. A method for manufacturing a rolling bearing (1) according to any one of claims 1 to 5, wherein a plurality of layers (7, 11, 12) are additively produced, in each of which different materials, differing from one another at least in terms of their electrical conductivity, are arranged side by side in geometrically defined layer sections (8, 9, 10), wherein similar layer sections (8, 9, 10) in a plurality of the said layers (7, 11, 12) are generated directly one above the other in such a way that a material layering is produced transverse to the structure of the additively manufactured layers (7, 11, 12).

7. The method according to claim 6, **characterised in that** a surface of the rolling bearing (1) is finished after additive manufacturing by machining with a geometrically undefined cutting edge.

## Revendications

1. Roulement (1) comprenant une pluralité de couches (7, 11, 12) imprimées en 3D, dans lequel au moins un sous-ensemble desdites couches (7, 11, 12) est composé de plusieurs sections (8, 9, 10) de couche de matériaux différents agencées les unes à côté des autres dans la couche (7, 11, 12) respective, et dans lequel des sections (8, 9, 10) de couche similaires sont agencées directement les unes au-dessus des autres dans plusieurs desdites couches (7, 11, 12), de façon à obtenir une stratification de matériau transversale à la structure des couches (7, 11, 12) imprimées en 3D, dans lequel au moins une des sections (9, 10) de couche est composée d'un matériau métallique et une autre section (8) de couche est composée d'un matériau électriquement isolant, et le matériau électriquement isolant contient au moins un matériau parmi le verre et la céramique sous forme de fritte,
**caractérisé en ce que**
dans une région de couches (7) fournissant une piste de roulement (5, 6) du roulement (1), chaque couche (7) est composée de trois sections (8, 9, 10) de couche différentes agencées les unes à côté des autres, à savoir une section (10) de piste de roulement métallique, une section (9) de couche centrale également métallique et une section (8) isolante, tandis que dans une région de couches (11) espacées de la piste de roulement (5, 6), chaque couche (11) est composée de seulement deux sections (8, 9) de couche différentes, à savoir une section (8) isolante et une section (9) dont la composition correspond aux sections de couche centrales (9).

2. Roulement (1) selon la revendication 1, **caractérisé en ce que** l'acier portant le numéro de matériau 1.3344 (X130WMoCrV6-5-4-3) est utilisé comme matériau métallique d'au moins une section (9, 10) de couche.

3. Roulement (1) selon l'une des revendications 1 ou 2, **caractérisé en ce qu'**une piste de roulement (5, 6) est formée par une pluralité de sections (10) de couche métalliques stratifiées.

4. Roulement (1) selon l'une des revendications 1 à 3, **caractérisé en ce qu'**il est réalisé comme une bague de roulement.

5. Roulement (1) selon la revendication 4, **caractérisé en ce que** l'épaisseur des sections (10) de couche fournissant la piste de roulement (5, 6) du roulement, à mesurer dans la direction normale d'un plan tangent à la piste de roulement (5, 6), diminue du centre de la piste de roulement (5, 6) vers l'extérieur et les sections (8) de couche électriquement isolantes forment à la fois une surface cylindrique (14) et une surface frontale.

6. Procédé de fabrication d'un roulement (1) selon l'une des revendications 1 à 5, dans lequel une pluralité de couches (7, 11, 12) sont produites par fabrication additive, dans lesquelles des matériaux respectivement différents, différant les uns par rapport aux autres au moins par leur conductivité électrique, sont agencés les uns à côté des autres dans des sections (8, 9, 10) de couche à géométrie définie, dans lequel des sections (8, 9, 10) de couche similaires dans plusieurs desdites couches (7, 11, 12) sont générées directement les unes sur les autres de manière à créer une stratification de matériau transversale à la structure des couches (7, 11, 12) fabriquées par fabrication additive.

7. Procédé selon la revendication 6, **caractérisé en ce qu'**une surface du roulement (1) est finie après fabrication additive par usinage par enlèvement de copeaux avec un outil de coupe à géométrie non définie.
